Europäisches Patentamt

European Patent Office

Office européen des brevets

(11) Publication number: **0 275 327 B1**

## EUROPEAN PATENT SPECIFICATION

(45) Date of publication of patent specification: **16.03.94**   (51) Int. Cl.⁵: **G10L  3/00**, G10L 5/06, G10L 7/08

(21) Application number: **87904962.5**

(22) Date of filing: **30.07.87**

(86) International application number:
**PCT/JP87/00569**

(87) International publication number:
**WO 88/01090 (11.02.88 88/04)**

(54) **VOICE RECOGNITION.**

(30) Priority: **30.07.86 JP 179394/86**
**18.03.87 JP 63406/87**

(43) Date of publication of application:
**27.07.88 Bulletin  88/30**

(45) Publication of the grant of the patent:
**16.03.94 Bulletin  94/11**

(84) Designated Contracting States:
**FR**

(56) References cited:
**EP-A- 0 083 509      EP-A- 0 181 167
JP-A- 6 127 599      JP-A- 6 172 300
JP-A- 6 199 200      JP-A-56 168 696
JP-A-58 111 989      JP-A-58 115 497
JP-A-60 175 098      JP-A-60 198 598
JP-B- 5 412 003      US-A- 3 812 291
US-A- 4 119 946      US-A- 4 776 017**

(73) Proprietor: **Ricoh Company, Ltd
3-6, Naka-Magome 1-chome
Ohta-ku Tokyo 143(JP)**

(72) Inventor: **FUJIMOTO, Junichiroh
33-22, Baba 2-chome
Tsurumi-ku
Yokohama-shi Kanagawa-ken 230(JP)**
Inventor: **YASUDA, Seigou
20-378, Nishiuraga-cho 3-chome
Yokosuka-shi Kanagawa-ken 239(JP)**
Inventor: **NAKATANI, Tomofumi
Room 203, 3-1, Susukino 2-chome
Midori-ku, Yokohama-shi Kanagawa-ken
227(JP)**

(74) Representative: **Joly, Jean-Jacques et al
Cabinet Beau de Loménie
158, rue de l'Université
F-75340 Paris Cédex 07 (FR)**

EP 0 275 327 B1

Rank Xerox (UK) Business Services
(3.10/3.09/3.3.3)

ELECTRONICS AND COMMUNICATIONS IN JAPAN, vol. 69, no. 3, March 1986, pages 27-37, Scripta Technica, Inc., Silver Spring, Maryland, US ; H. MATSUMOTO et al. : "Spoken word recognition of independent speakers using local-peak-weighted average dictionary".

## Description

FIELD OF TECHNOLOGY

The present invention generally relates to a voice recognition apparatus, and in particular to a voice pattern matching method and a degree of similarity calculating method for use in a voice recognition apparatus.

BACKGROUND TECHNOLOGY

As a method for recognizing a voice or a word, there have currently been developed a number of systems. Many of these are based on the so-called pattern matching, in which voices to be used are previously registered and an unknown input voice is recognized by examining which of the already registered voices is most similar to a later input voice. The pattern matching method is widely prevalent because the number of calculations is less and the rate of recognition is higher as compared with other methods, such as the one using a discrimination function.

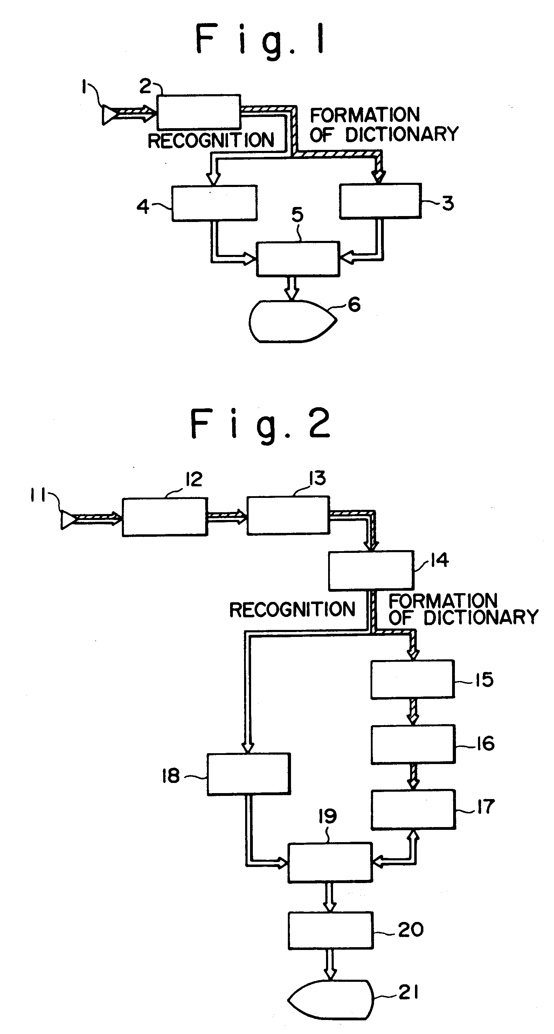

Fig. 1 is a structural drawing for describing one example of the above-described pattern matching method; in the drawing, 1 is a sound collecting device, such as a microphone, 2 is a filter bank, 3 is a dictionary, 4 is a local peak detecting unit, 5 is a degree of similarity calculating unit and 6 is a recognition result output unit. As well known, a voice obtained through a sound collecting device, such as a microphone, is converted into a feature quantity, such as a frequency spectrum, which is used to form a feature pattern for pattern matching. At this time, since the value of one spectrum is represented by ordinarily allocating 8 - 12 bits, if $m$ number of samples are taken on frequency, one time sample (1 frame) can be represented by 8 X m - 12 X m bits. In general, since one time sample is formed in the order of 10 milli-seconds, a pattern of $n$ frames has 8 X m X n - 12 X m X n bits. For a distance which represents a difference between two patterns for pattern matching with one pattern defined by $a_{11}, a_{21}, ..., a_{m1}, ..., a_{mn}$ and the other pattern defined by $b_{11}, b_{21}, ..., b_{m1}, b_{21}, ..., b_{mn}$, use is made of the following urban district distance.

$$D = \sum_{ij} \left| a_{ij} - b_{ij} \right| \qquad (1)$$

That is, according to this method, the comparison of one pattern can be made by executing the calculation of 8 - 12 bits over $i \cdot j$ times. And yet the above-described example is the case when the two patterns to be compared are same in time length, so that even more calculations are required for equalizing the time length for voices which always change the time length.

One such pattern matching method which is less in the amount of data and which can be executed with simple calculations by using BTSP (Binary Time-Spectrum Pattern) has been presented. (Lecture Papers of Japan Society of Acoustics, p. 195, Autumn, 1983)

Fig. 2 is a structural drawing for describing one example of the above-described BTSP; in the drawing, 11 is a sound collecting device, such as a microphone, 12 is a filter bank, 13 is a correcting unit by the least square, 14 is a binary converting unit, 15 is a BTSP forming unit, 16 is an adding unit of $n$ times pronounced patterns by linear expansion and contraction, 17 is a dictionary, 18 is a peak pattern forming unit, 19 is a pattern length matching unit by linear expansion and contraction, 29 is a degree of similarity calculating unit and 21 is a result displaying unit. A voice input through the microphone is subjected to frequency analysis utilizing a bandpass filter bank or the like, whereby frequency and its temporal variation is represented as a pattern (TSP). Furthermore, this is converted into BTSP by binary conversion with a peak in frequency set as "1" and the rest as "0", and BTSPs obtained by a plurality of pronunciations are superimposed and registered as a standard pattern. When an unknown voice has been input, from this voice, a BTSP is formed through a similar process as in the case of forming a standard pattern and compared with a previously registered standard pattern to thereby determine the degree of similarity with each standard pattern. The degree of similarity is obtained by the overlapping condition of elements "1" when the BTSP of the unknown voice is superimposed on the standard pattern. Typically, for an indefinite speaker voice recognition apparatus capable of recognizing an anybody's voice, use is made of a means for increasing the amount of calculations, e.g., forming a plurality of standard patterns for a voice to be registered; however, in accordance with this method, if a standard pattern is formed well, there is a merit of capability to easily realize a voice recognition apparatus for indefinite speakers without increasing the amount of calculations so much.

The degree of similarity S of two patterns defined by this method is expressed as follows.

$$S = \sum_{ij} a_{ij} \cdot b_{ij} \qquad (2)$$

Since each of elements $\underline{a}$ and $\underline{b}$ is either 1 or 0 or its result of calculation, although it can be represented even if a large number of bits are not allotted, since it is common to give a unit of computer calculation (4, 8, 16, ... bits), there results a waste for the one which can be realized by the least amount of calculations and the least amount of memory.

Similarly with the other, also in the field of voice recognition, as the number of patterns to be compared increases, a matching method shorter in calculation time for one pattern comes to be required. Comparison may be made with all of the patterns with such a matching method having fewer calculations, or use may be made of a method in which several correct answer candidates are selected by such a simple method and then a fewer number of patterns are finally compared in detail. As a matching method relatively fewer in the amount of calculations, a method using a binary converted time frequency pattern has been proposed.

The apparatus of Fig. 2 recognizes an input pattern and a dictionary pattern obtained by subjecting a voice pronounced with a word as a unit by linear matching. Incidentally, what is shown in Fig. 2 illustrates the definite speaker type, and a voice is registered following the shaded path. In the case of voice recognition for an indefinite speaker, it is so structured that a dictionary is freshly formed as a superimposition of BTSPs.

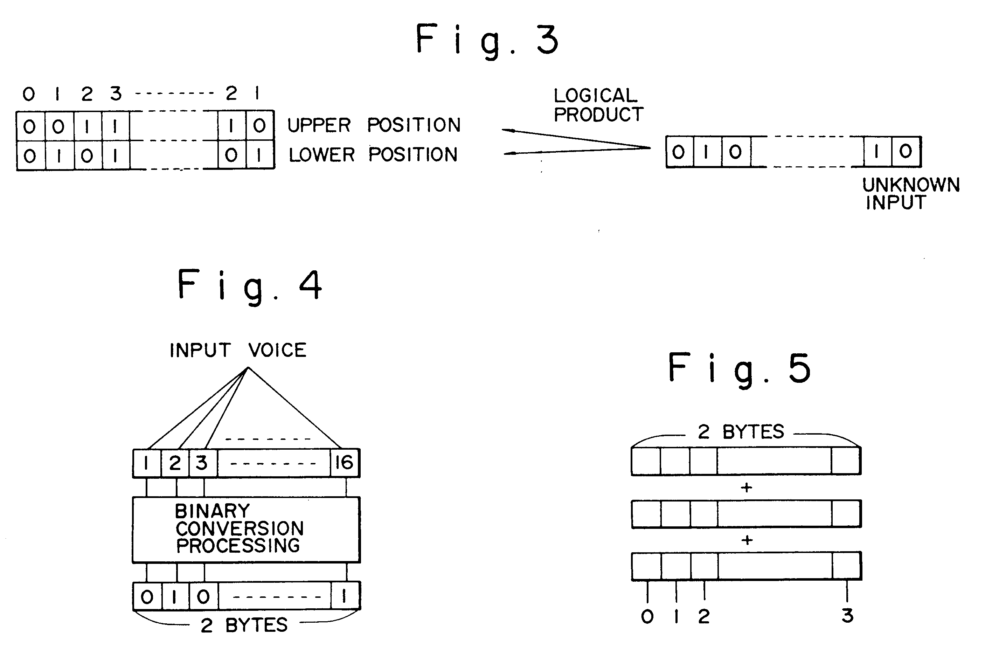

This method has a merit in that if the filter bank is set at 16 channels, a binary converted result may be treated as an 16-bit data. A series of these 16 data is called a frame. In what is obtained by adding this 16-bit, 2-byte data three times (dictionary pattern or reference pattern), the maximum of one element is 3 so that each element must be represented by two bits. In this case, two bits are divided between an upper and a lower positions, whereby an upper one frame is allotted to a 2-byte data and the lower position is allotted to another 2 bytes. This is illustrated in Fig. 3. That is, a 2-byte horizontal row corresponds to 16 filters of the filter bank. At the time of pattern matching, if an unknown input is represented by one frame, 2 bytes when binary converted, a product of the value of each of the channels can be obtained easily and the calculation is easy if a logical product is obtained with a bit correspondence between the unknown input and each of the bytes of the upper and lower positions of 4-byte pattern. This method itself is fewer in the amount of calculations and can be processed at high speed even if the number of patterns to be matched is relatively large; however, in the case where each element of a dictionary pattern cannot be represented in the order of two bits, e.g., in the case of 4 - 6 bits, calculations must be done with each; furthermore, in the case where the number of words to be registered is large and exceeds 500, it takes time even by this method.

In voice recognition, there are a definite speaker system and an indefinite speaker system, whereby the former requires to register the voices of a user in advance and on the other hand the latter has a merit of requiring no such thing. A typical indefinite speaker system is a multi-template system, according to which a plurality of standard patterns are prepared for one category to be registered and the one having the greatest similarity is found therein. In this manner, a number of calculations are required in the indefinite speaker system, and as a result there are such disadvantages as taking time in recognition and the correct answer rate being low. Recently, as a recognition system which is simple and suitable for an indefinite speaker system, the one using BTSP has been presented. (see Fig. 2)

In the system of Fig. 2, since a set of frequency data sampled at a certain point in time (hereinafter, referred to as a frame) can be treated as being uniformly allotted to a register in the order of two bytes, the amount of memory is reduced.

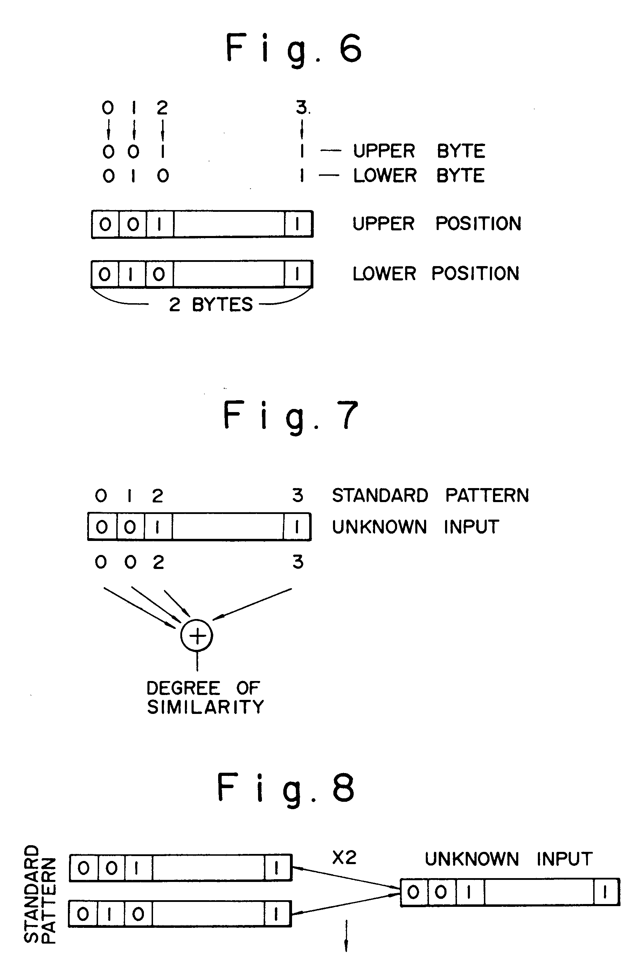

Fig. 4 shows a manner of allotting outputs of sixteen filters to a 2-byte register. For example, if such data are superimposed three times to define their sum, the value of each ranges between 0 and 3 as shown in Fig. 5, so that it cannot be represented by two bytes. Under the circumstances, as shown in Fig. 6, the value of each is represented by a binary number with its only upper position being represented by two bytes as a set and its only lower position being represented by two bytes as a set. This is set as a standard pattern, and in order to determine the degree of similarity with an unknown, input pattern formed as shown in Fig. 4, both of them are superimposed as shown in Fig. 7 to determine a product of corresponding bits, which is determined as the degree of similarity. However, such calculations are cumbersome and time-consuming, and thus a method shown in Fig. 8 is conceivable. A standard pattern is divided between upper and lower positions as shown in Fig. 6 and an unknown input is superimposed on the upper position to obtain a logical product of each bit. Similarly for the lower position, a logical product is obtained, and a total of the value of each bit of the upper position is multiplied by two or added twice and the sum of the bits of the lower bit is added to obtain the same result as that of Fig. 7, which is set as the degree of similarity. While obtaining the degrees of similarity between the unknown, input pattern and all of the registered standard patterns, the unknown input is considered to be classified to the standard pattern having the largest degree of similarity so that the label assigned to the standard pattern is output as the result of recognition. In this manner, the degree of similarity can be calculated simply; however, the portion of obtaining a logical product between two sets of binary patterns and calculating a total of the value of each bit therein requires the most calculating time in this system.

There is also disclosed in document US-A-4 119 946 a comparison apparatus, e.g. for use in character recognition in which an input vector is compared simultaneously with a number of reference vectors read out in time-parallel fashion. The comparisons are effected on a bit-by-bit basis, with the comparison output accumulated in an analog integrator for each respective reference vector. The reference vector that most closely matches the input vector is determined by the highest accumulated value on the corresponding integrator.

Moreover, an article in "Electronics and Communications in Japan", Volume 69, No.3, pages 22-27 by Matsumoto et al and entitled "Spoken word recognition of independent speakers using local peak weighted average dictionary" (published in March 1986) discloses obtaining a weighted average dictionary in Figure 8. The weighted values are processed as such for the comparison with an input word. This would mean that for each channel (frequency band) the comparison would have to be effected with a large number of bits if the average for that channel is large.

The present invention has been made so as to obviate the disadvantages of the prior art as described above and has its object to provide a voice recognition apparatus which allows to carry out pattern matching at high speed in particular with a minimum of calculations.

Another object of the present invention is to provide a simple pattern degree of similarity calculating method useful for voice recognition.

A further object of the present invention is to provide a pattern similarity calculating method useful for voice recognition, which allows high-speed processing and minimizes the amount of calculations.

DESCRIPTION OF THE INVENTION

According to the present invention, there is provided a voice recognition apparatus and method as defined in claims 1 and 7 respectively.

The present invention is able to alleviate the burden on the comparison stage by considering a reduced form of the standard voice pattern.

In one embodiment, the voice pattern is converted into a feature quantity sampled at a certain time interval to form a series of data at unit time. The series of data is allotted to a register having the power of two as a unit: if one data takes the value equal to 2 or more, it is treated as divided in plural units of registers. The degree of similarity with an unknown, input pattern is determined using registers equal to or more than one unit of plural units of registers which represent a series of samples and less than the total number of registers, or by executing a logical calculation with a portion of plural units of registers which represent a series of samples to thereby form a new pattern and determining the degree of similarity with an unknown, input pattern.

This embodiment exploits the fact that each element of a series of data is uniformly allotted to each bit of each of upper and lower register units. For example, there is provided a method of calculating the degree of similarity of a voice pattern by converting a voice into a feature quantity, sampling at a certain time interval to form a series of data at unit time, allotting said series of data to a register having the power of two as a unit, and if one data takes the value equal to 2 or more, treating this as divided in plural units of registers, characterized by determining the degree of similarity with an unknown, input pattern using registers equal to or more than one unit of plural units of registers which represent a series of samples and less than the total number of registers.

The degree of similarity may also be achieved by matching an unknown pattern with previously registered standard patterns in sequence, the already obtained degrees of similarity are then retained as divided in a plurality of registers and a value obtained by comparing a portion of the next standard pattern and an input is compared with the value within the registers for a portion of the already obtained degree of similarity, whereby the calculation of the degree of similarity with the current standard pattern is terminated if the former value is larger.

It is also possible to allot feature quantities of second, ..., nth (here, n is an integer) obtained by means separate from said feature quantity to a certain bit of the same data and controlling pattern matching of the original feature quantity based on this information.

This overcomes the disadvantages of the prior art as described above and its control information is contained in BTSP data to thereby increase the speed of calculations and determination and also the recognition rate.

Fundamentally, the BTSP system produces many advantages if the formant information of a voice is represented by a binary data of 0 and 1 and calculations are carried out by treating as a 16-bit data as described before.

This aspect of the present invention is furthermore purported to carry out calculations at even higher speed by allocating the information, which is necessary for recognition calculations and can be determined to be either 0 or 1 by one sample data of one pronunciation, to an empty channel of the above-described BTSP data and carrying out calculations with the before-mentioned data structure.

BRIEF DESCRIPTION OF THE DRAWINGS

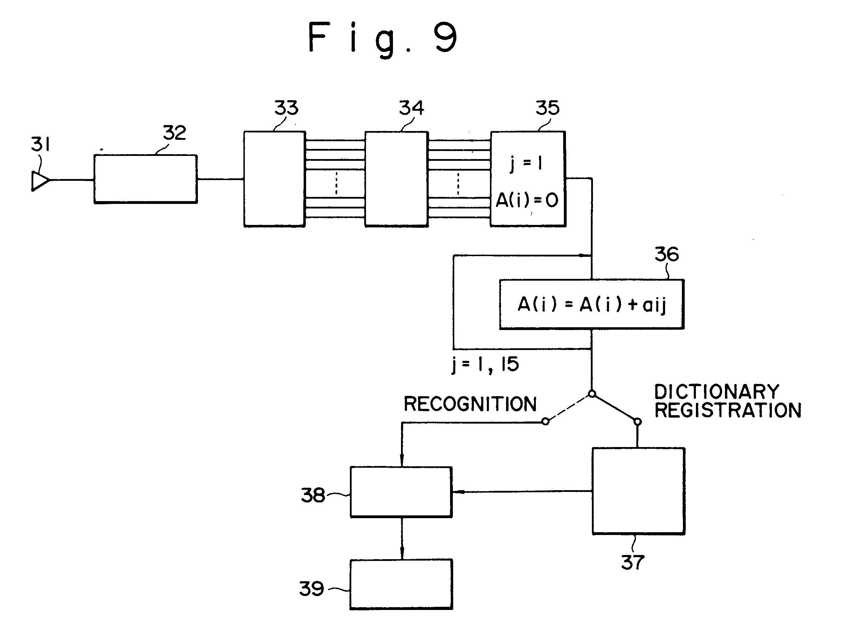

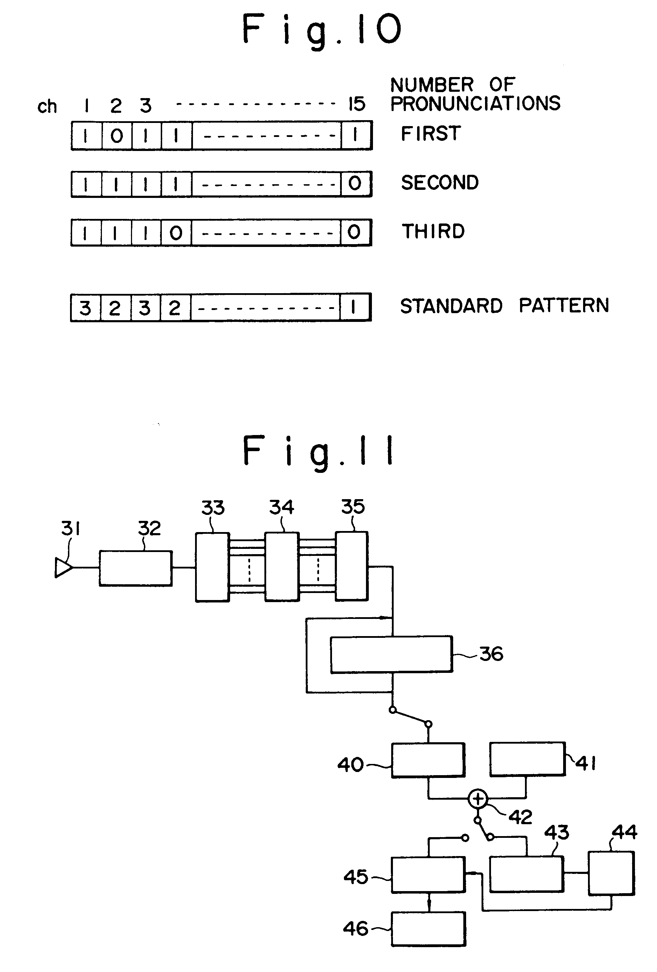

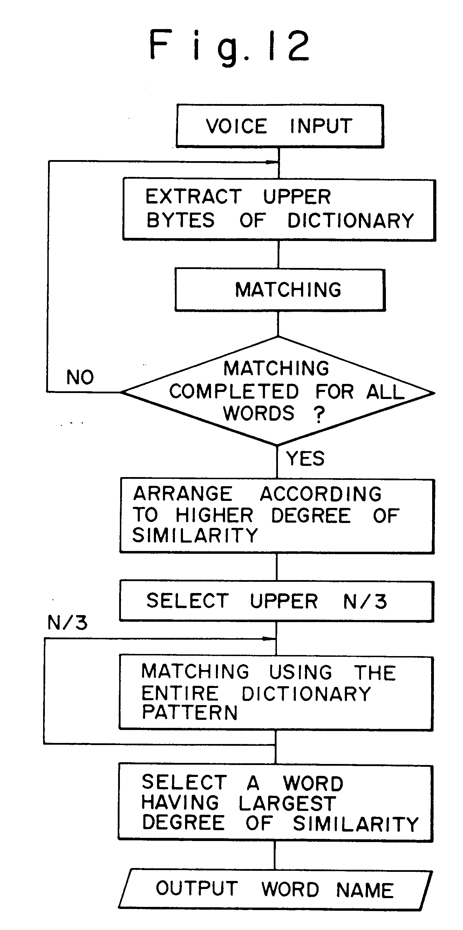

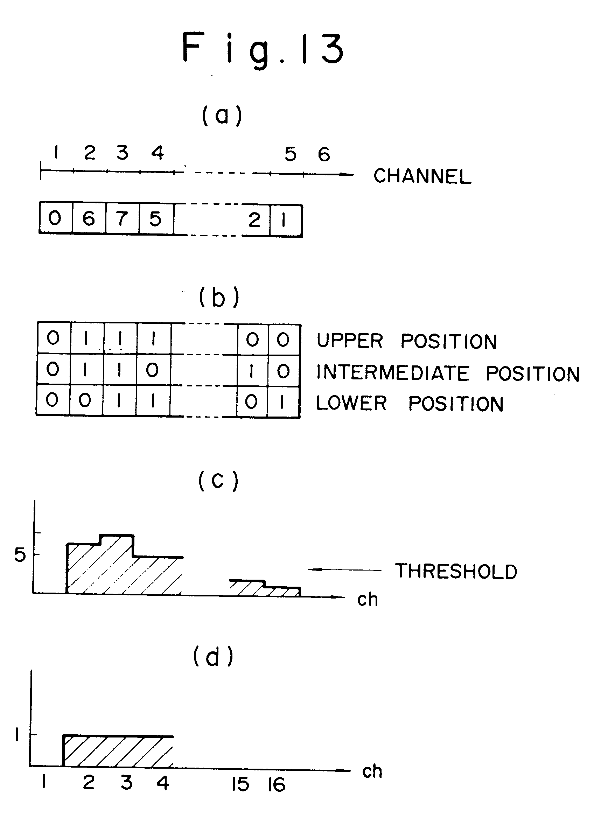

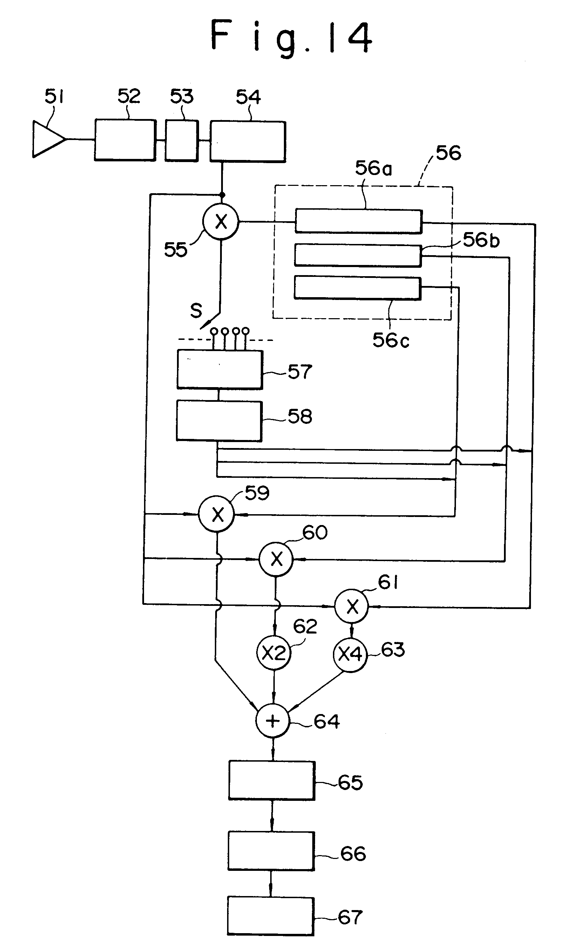

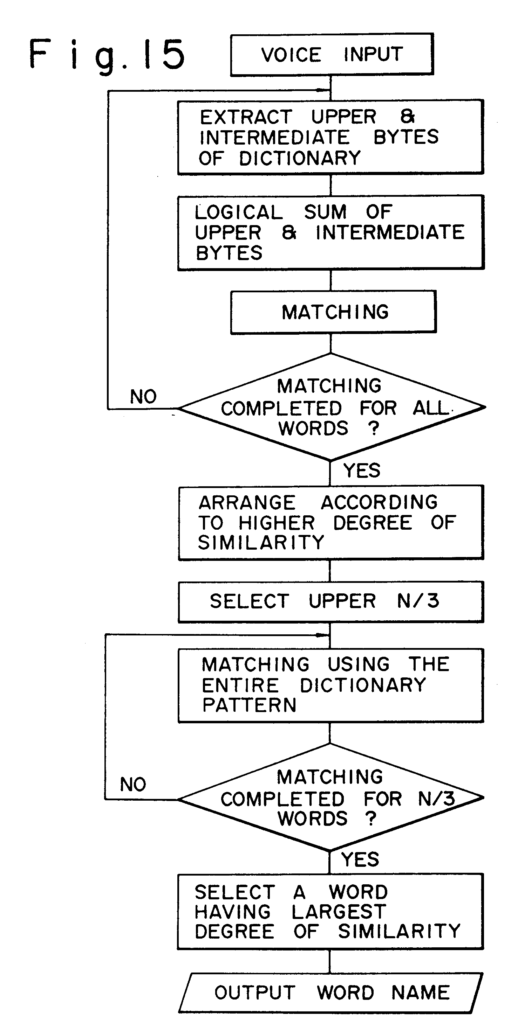

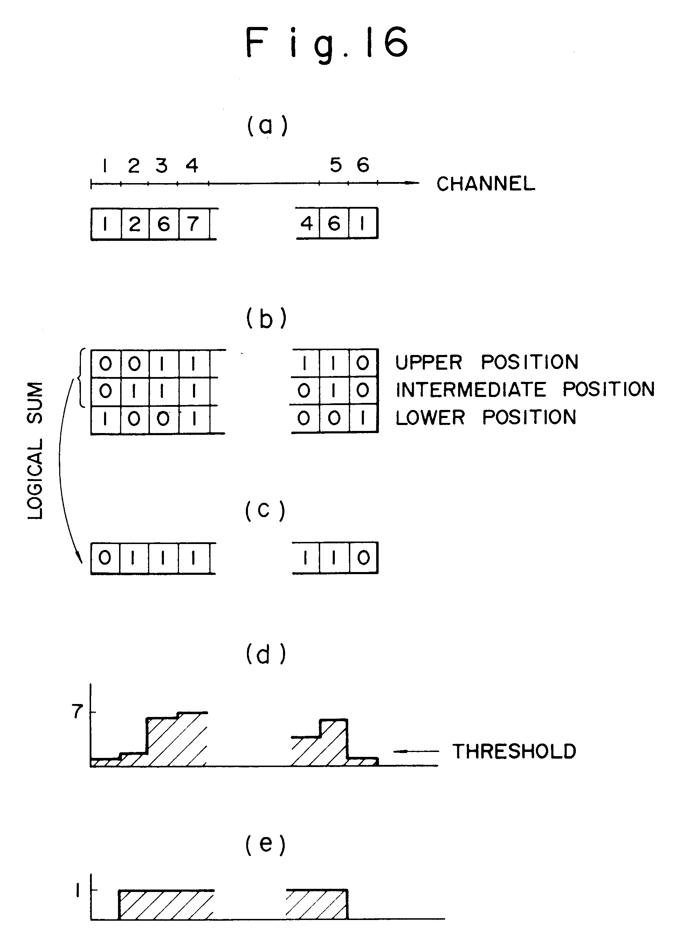

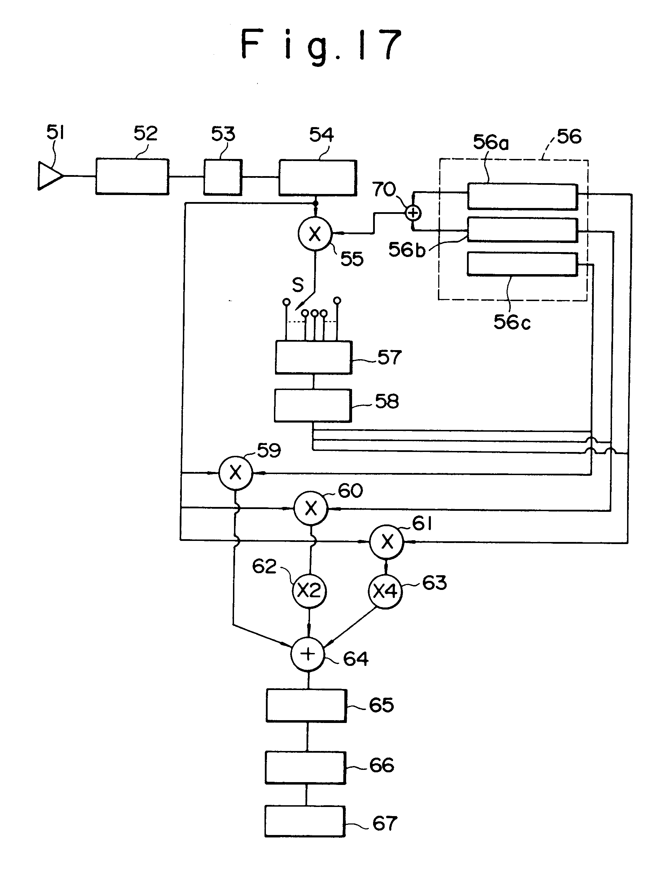

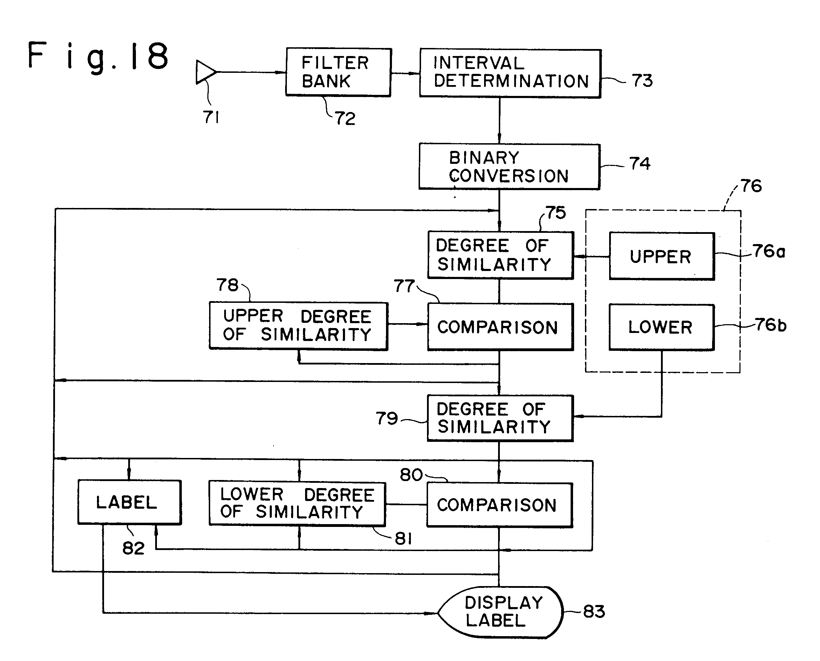

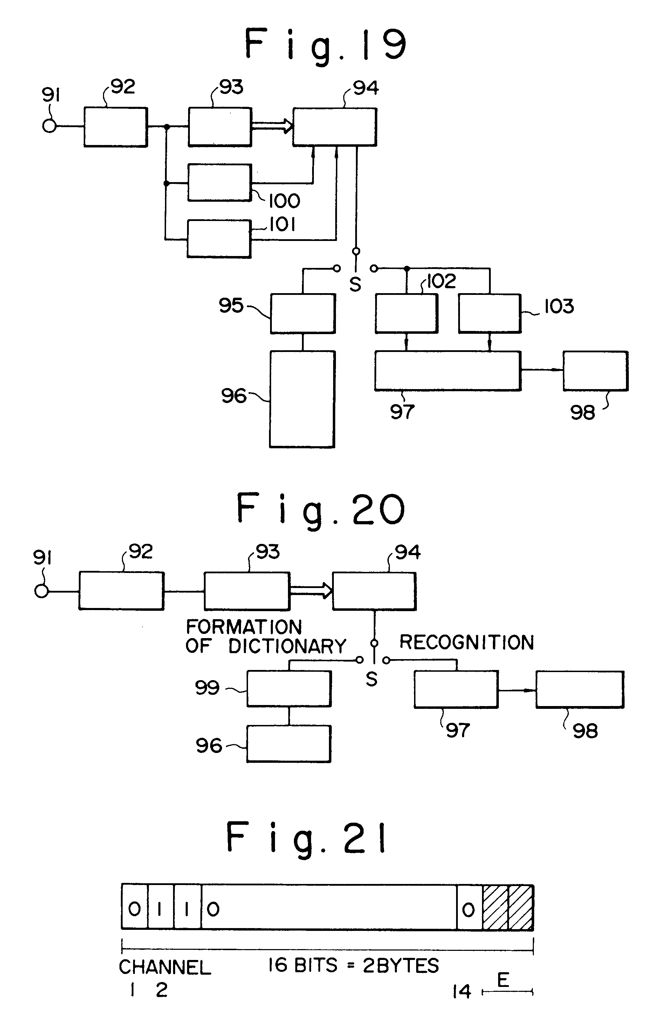

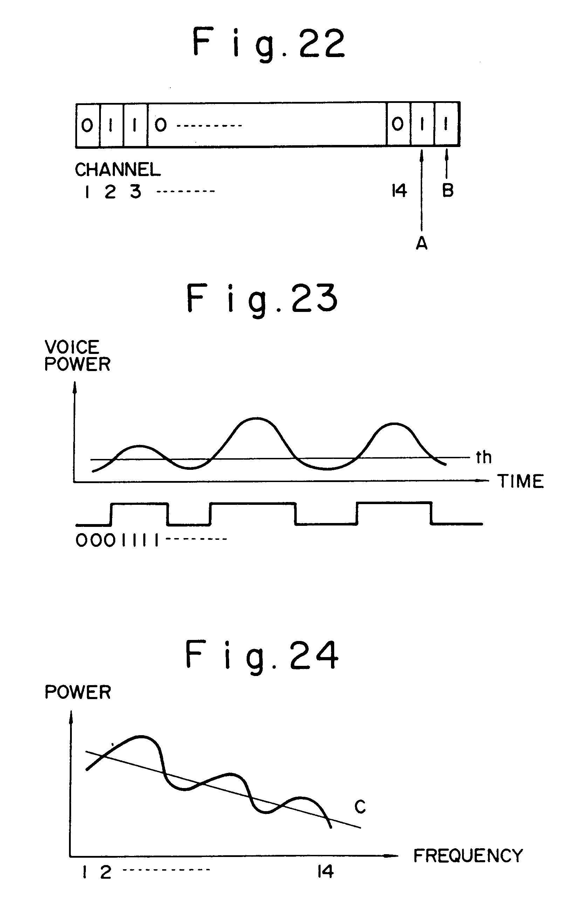

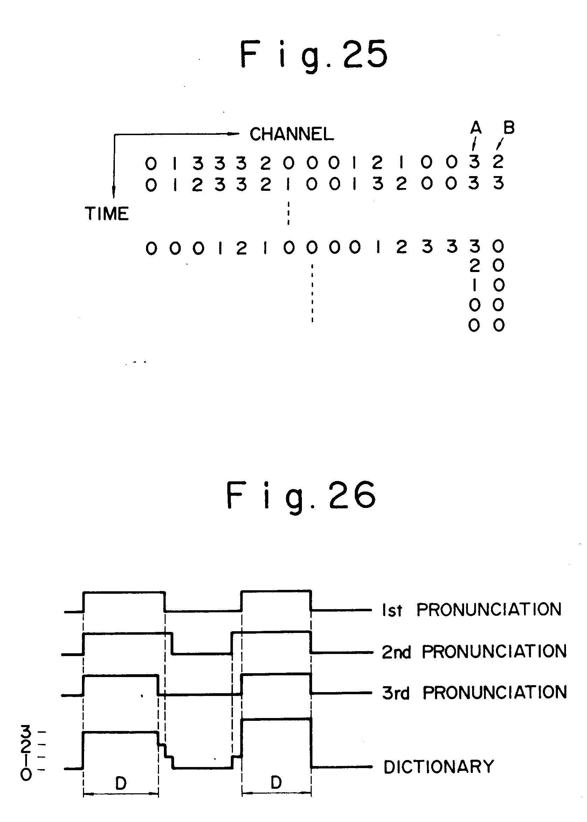

Figs. 1 and 2 are block diagrams showing prior art voice recognition apparatuses; Fig. 3 is a schematic illustration showing one example of a prior art method for calculating the degree of similarity of a pattern; Fig. 4 is an illustration showing an allocating manner of allocating outputs of sixteen filters to a 2-byte register; Fig. 5 is an illustration showing one example in the case when a binary data is superimposed over three times; Fig. 6 is an illustration showing an example in which the result of superimposition shown in Fig. 5 is represented by upper and lower two bytes; Fig. 7 is an illustration showing one example for determining the degree of similarity between a standard pattern and an unknown input; Fig. 8 is an illustration showing an example of a system for comparing the degree of similarity of a pattern to which the present invention is applied; Fig. 9 is a block diagram showing a voice recognition apparatus constructed based on one embodiment of the present invention; Fig. 10 is an illustration showing an example in the case of forming a standard pattern from BTSP for which the same voice has been pronounced over three times; Fig. 11 is a block diagram showing another embodiment of the present invention; Fig. 12 is a flow chart showing each step of a method for calculating the degree of similarity of a pattern based on one embodiment of the present invention; Fig. 13 is an illustration useful for understanding the method of Fig. 12; Fig. 14 is a block diagram showing one example of an apparatus suitable for practicing the method shown in Fig. 12; Fig. 15 is a flow chart showing each step of a method for calculating the degree of similarity of a pattern based on another embodiment of the present invention; Fig. 16 is an illustration useful for describing the method of Fig. 15; Fig. 17 is a block diagram showing one example of an apparatus suitable for practicing the method shown in Fig. 15; Fig. 18 is a block diagram showing an apparatus suitable for practicing a method for comparing the degree of similarity of a pattern based on one embodiment of the present invention; Fig. 19 is a block diagram showing an apparatus suitable for practicing a pattern matching method according to one embodiment of the present invention; Fig. 20 is a block diagram showing one example of a prior art pattern matching system; Fig. 21 is an illustration showing a binary data; Fig. 22 is an illustration showing an example of using an empty bit; Fig. 23 is an illustration showing a method for determining a voice interval; Fig. 24 is an illustration showing a method of sampling a BTSP data; Fig. 25 is an illustration showing one example of a weighted average; and Fig. 26 is an illustration showing an example of a recognition calculation.

BEST MODE FOR PRACTICING THE INVENTION

Fig. 9 shows a voice recognition apparatus constructed on the basis of one embodiment of the present invention.

In the drawing, 31 is a voice collecting device, such as a microphone, 32 is a voice interval detecting unit; 33 is a bandpass filter bank, 34 is a binary converting unit, 35 is an initial value setting and selection circuit; 36 is an allocation calculating unit, 37 is a dictionary; 38 is a matching unit; and 39 is a result outputting unit. In this embodiment, a voice recognition apparatus including means for collecting a voice, means for converting a collected voice into a plurality of feature quantities and means for forming a feature pattern by quantizing said feature quantity by an interval which may be regarded as the same time. And, calculations are carried out while allocating the data sampled by an interval which may be regarded as the

6

same time uniformly in computer calculation units (4 bits, 8 bits, 16 bits, etc.), thereby setting the number of feature vectors quantized by an interval which may be regarded as the same time to be an integer multiple of 4 and representing the elements of each vector by 1 or 0 by binary conversion to calculate as unit vectors.

That is, in the embodiment shown in Fig. 9, in the first place, a voice is collected by a microphone and only a voice interval is extracted by an interval detecting unit for separating from noise or the like, and then it is subjected to frequency analysis by a bandpass filter bank 33 to thereby have it binary converted. Incidentally, any well-known method may be applied for the binary conversion process of a pattern.

Then, for a voice to be used, its binary converted pattern (BTSP) is formed and registered in advance as a standard pattern, and an input, unknown voice is also converted into BTSP, which is compared and matched with the standard patterns to thereby determine the standard pattern highest in similarity as a recognition result.

In Fig. 9, an output of each of fifteen bandpass filters is represented in the order of 8 bits; however, in accordance with this described method, an output of each bandpass filter of these after binary conversion is represented by sixteen bits. That is, the value of a first channel is allocated to the lowest bit of sixteen bits while allocating gradually to higher bits as second, third, .... A manner of allocation may, for example, be carried out as follows.

$$A(i) = \sum_{j} 2(j-1) \cdot a_{ij} \qquad (3)$$

Here, i is a frame number; j is a channel number of a filter; and $a_{ij}$ indicates each element of BTSP similar with equations (1) and (2). With this, the degree of similarity S as shown in equation (2) can be expressed as follows.

$$S = \Sigma A(j) \wedge B(j) \qquad (4)$$

Here, $\wedge$ indicates a logical product for each bit. That is, in equation (2), it was necessary to obtain a product of each element; whereas, in equation (4), it is only necessary to calculate a logical product for each frame.

Therefore, the amount of memory which has heretofore been required to represent one pattern is reduced and the speed of calculation is increased. In this case, the efficiency varies depending on the number of bandpass filters to be selected.

Fig. 10 shows an example in which, in a definite speaker system, a standard pattern is formed by superimposing three pronounced BTSPs for one voice (Lecture Papers of the Japanese Society of Acoustics, p. 195, Autumn, 1983), and in this figure, one frame corresponding to BTSPs formed when pronounced over three times is shown as extracted. By superimposing in this manner, each element of a standard pattern comes to have a value of 0 - 3, so that it cannot be represented by a binary value.

Fig. 11 shows an embodiment which has been improved on the above-described disadvantage. In the drawing, 40 is an upper bit unit; 41 is a lower bit unit; 42 is an adder unit; 43 is a registration calculation logic unit; 44 is a dictionary unit; 45 is a recognition calculation logic unit; and 46 is a result output unit. The remaining 31 through 36 correspond to 31 through 36 of the embodiment shown in Fig. 9. Thus, in the present embodiment, there is defined a voice recognition apparatus including means for collecting a voice, means for converting this into a plurality of feature quantities, and means for forming a feature pattern by quantizing said feature quantities at an interval which may be regarded as the same time. And, the data which has been sampled at an interval which may be regarded as the same time is uniformly allocated among computer calculation units (4 bits, 8 bits, 16 bits,...) and calculated, and then the number of feature vectors to be quantized by an interval which may be regarded as the same time is arranged to be an integer multiple of 4. And an element of each vector is represented by 1 or 0 by a binary conversion process so that it can be calculated as a unit vector. And, when a feature vector ceases to be a unit vector as a result of calculation, each element of the vector is represented by a binary number, whereby a new vector is created according to its position for calculation. As shown in Fig. 10, when a standard pattern is formed by superimposing BTSPs produced by pronouncing the same voice over three times, each element of the standard pattern has a value of 0 -3. Thus, the number of bits required for representing one element is 2 bits. On the other hand, since an input voice is converted into an ordinary BTSP, each element is represented by one bit, so that the calculation for the degree of similarity between the two becomes very complicated. In accordance with the method proposed here, these two bits are divided into upper and lower position bits, whereby the upper position with the amount of 15CH is represented by one word, i.e., 16 bits, and the lower position is represented by another word. With this, the degree of similarity S can be determined by the following equation.

$$S = \sum_{j} (Ah(j)^{\wedge}B(j)) U (Al(j)^{\wedge}B(j)) \qquad (5)$$

Here, h and l indicate the upper and lower position bits, respectively, and U indicates a logical sum. A product of two patterns represented by equation (2) can be obtained by a product of two words and a sum of these results as in equation (5). In the case of an indefinite speaker system, since a standard pattern is formed by superimposing approximately 10 BTSPs for one voice, one element in a pattern is represented by four bits. In this case, similarly with the previous example, four bits are divided and allocated to separate words, whereby each word is treated as a unit vector representing 1 - 15 CH. Incidentally, each embodiment of the present invention has been described above; however, it may be easily understood that the present invention may be realized either by software or by hardware.

As is obvious from the above description, in accordance with one aspect of the present invention, the amount of memory for standard patterns is reduced and the calculation for the degree of similarity is reduced, thereby allowing to increase the speed of recognition. In addition, when determining "number M of elements having 1 twice or more among three pronunciations in a standard pattern" (in the case of a definite speaker system), which is the information auxiliarily used for calculating the degree of similarity, there is a merit that it can be easily determined if the following calculation is made.

$$M = \sum_{j} Ah(j)^{\wedge}1$$

Here, l indicates a unit vector whose elements are all 1.

Fig. 12 is a flow chart for describing one embodiment of a method for calculating the degree of similarity of a pattern of the present invention; Fig. 13 is a drawing showing a pattern example for describing the embodiment shown in Fig. 12; and Fig. 14 is a drawing showing one example of an apparatus suitable for practicing the embodiment shown in Fig. 12. In Fig. 14, 51 is a microphone; 52 is a 16-channel bandpass filter; 53 is a binary conversion unit; 54 is a register; 55 is a multiplier unit; 56 is a dictionary pattern (here, 56a is an upper position byte; 56b is an intermediate position byte; and 56c is a lower position byte); 57 is a register; 58 is a portion for storing N/3 number of names of the upper position; 59 - 63 are multiplier units; 64 is an adder unit; 65 is a register; 66 is a maximum degree of similarity calculation unit; and 67 is a result output unit. In the first place, an input voice is converted into a feature quantity and matched with the upper byte of a dictionary pattern. Since the input pattern is binary converted and it is represented by a series of two bytes, the degree of similarity between the two can be determined by taking a logical product between the upper byte of Fig. 13 (b) and this input byte. This corresponds to the determination of a correlation between elements of 4 or more in the pattern of Fig. 13 (a) and the input and is equivalent to the determination of a correlation with the input pattern by binary coverting the value ranging from 0 to 7 of Fig. 13 (a) with 4 as a threshold value. Since it is changed to one byte as compared with the prior art which used three bytes of upper, intermediate and lower bytes, the calculation is reduced to 1/3, but of course the accuracy of calculation is also reduced. Thus, if the number of registered words is set at N as shown in Fig. 12 and the candidates are reduced, for example, to N/3 by this method while carrying out the normal matching to the remaining words, the total amount of calculation will be 2N, i.e., the preliminary calculation N plus the normal calculation 3•N/3 in contrast to the prior art which required the amount of calculation 3N because 3-byte calculation was carried out for N words, so that the amount of calculation is reduced to 2/3. Of course, there appears a difference in the amount of reduction depending on the number of words to remain as a result of the preliminary selection method and the structure of a dictionary pattern.

In Fig. 14, a dictionary pattern is previously registered as being divided among upper, intermediate and lower position bits. It may be so structured that this can be registered within the apparatus; however, since the method of this registration does not affect the present invention, its detailed description will be omitted. In the first place, when an unknown input enters, it passes through the 16-channel bandpass filter, whereby a frequency analyzed result is sampled as a series of data (frame) for example at about 10 ms and stored in the register 54. A logical product between the upper position byte of a dictionary pattern and the input pattern of the register is determined and a total of its 16 channel portion and time length portion is stored in the register 57. In this case, although not described in particular, for the method of equalizing the time length of the two patterns, a method using the before-described BTSP may be used as an example. Here, a pattern (Fig. 13 (d)) which has been obtained by binary converting Fig. 13 (c) by converting 4 or more to 1 is compared with an input pattern and the degree of similarity between two patterns is defined by the number of overlapping portions between the two. This degree of similarity is stored into the register 57 in the order of matching, from which word names or word numbers falling into the upper position N/3 are extracted, and the entire dictionary patterns corresponding thereto are taken out, followed by the step of taking a logical product with the pattern of binary converted input voice stored in the register 54. In this case also, similarly with the previous logical product, the results of products are totalled for 16 channel portions and time length portions. A product between the result of a product with the lower position byte and the intermediate position byte is determined and then a sum of twice the result and four times of the same thing of the upper position is determined. In this manner, the degree of similarity representing the degree of overlapping condition between the pattern of Fig. 13 (c) and the input pattern is obtained, and the maximum of such results is output as the result of recognition. In this manner, the candidates for which strict matching is to be carried out can be reduced in number by such a simple calculation, and as a result, the overall amount of calculation can also be reduced. Here, matching with the upper position byte has been described; however, matching may also be carried out with the intermediate position byte as well as the upper position byte, though the amount of calculation will increase as compared with the case with the upper position alone. However, in accordance with this method, when a dictionary is represented by one set of bytes, it is equal to that which has been binary converted by setting the threshold value to 1/2 of the maximum value of the original dictionary and the threshold value cannot be shifted otherwise. Under the circumstances, it has been so structured to carry out logical calculations by a portion of a register of plural units representing a series of samples, form a new pattern and then to determine the degree of similarity with the unknown input pattern.

Fig. 15 is a drawing for describing one embodiment for that case; Fig. 16 is a drawing showing a pattern example for describing the embodiment shown in Fig. 15; and Fig. 17 is a drawing showing one example of an apparatus suitable for practicing the embodiment shown in Fig. 15. In Fig. 17, 70 is an adder and those portions whose functions are similar to those devices shown in Fig. 14 are indicated by the same reference numbers in the case of Fig. 14. For the brevity of description, hereinafter, only the differences with the embodiment shown in Figs. 12 through 14 will be described. Now, in the present embodiment, prior to matching between an input voice and the upper position byte of a dictionary, a logical sum between the upper and intermediate position bytes of a dictionary is determined and then matching between this result and the input is carried out. The pattern obtained by the logical sum between the upper and lower positions of Fig. 16 (b) is as shown in Fig. 16 (c), which is equal to a pattern of Fig. 16 (d) and thus is in agreement with the case in which the threshold value of the before-described embodiment has been lowered. If use is made of a logical product instead of a logical sum, this will be tantamount to the case in which the threshold value is increased to 6 as compared with the before-described embodiment. In this manner, it comes to be able to vary the threshold value by increasing one logical calculation. A specific apparatus of the embodiment shown in Fig. 15 will be as shown in Fig. 17, and the difference from the apparatus shown in Fig. 14 resides in that a dictionary pattern for use in preliminary matching is formed by a logical sum between the upper and intermediate positions of the dictionary.

According to this embodiment, since, while using both bits of the upper and lower positions, the two are matched after compression without separately matching the two, the amount of calculation for matching is not much increased as compared with the case of matching with the upper byte only.

Incidentally, in the above, a bit structure of three kinds, i.e., upper, intermediate and lower positions, was used; however, it does not have to be three kinds and four kinds or more may be used, and as the number of kinds increases, the effect of an increase in speed becomes conspicuous. Although the degree of similarity has been described to be obtained by a logical product in accordance with prior art, it goes without saying that the present invention should not be limited only to this.

Fig. 18 is a block diagram showing one embodiment of a method for comparing the degree of similarity of a pattern of the present invention. In the drawing, 71 is a microphone; 72 is a filter bank (feature extraction unit); 73 is a voice interval extracting unit; 74 is a binary conversion unit; 75 is a degree of similarity calculating unit; 76 is a dictionary; 77 is a comparing unit; 78 is an upper position degree of similarity calculating unit (degree of similarity register); 79 is a degree of similarity calculating unit; 80 is a comparing unit; 81 is a lower position degree of similarity calculating unit (degree of similarity register); 82 is a label unit (label register); and 83 is a label display unit. In the first place, it is assumed that a reference pattern is previously registered in the dictionary register 76. It is assumed that one frame of each reference pattern has two layers of upper position 76a and lower position 76b and these are stored in separate registers. At first, with the degree of similarity registers 78 and 81 cleared to be 0, an input voice is produced toward the microphone 71. Here, the feature extraction unit 72 is shown to be constructed by a filter bank of sixteen bandpass filters so as to carry out frequency analysis; however, it may be replaced by a feature parameter, such as a linear prediction coefficient, if desired. At the interval extracting unit 73, using a feature extracted parameter, a voice portion is extracted from the unnecessary sound to thereby carry out interval detection. The sequence of feature extraction and interval detection is not particularly limited, and either can be carried out first. As an interval detection method, since the energy of a microphone output increases when a voice has been input, a method utilizing a variation of its energy is often used. An interval may also be determined by a variation of spectrum. Its result is binary converted by the binary conversion unit 74. As a method of binary conversion, any well known method may be used. A binary converted data may be represented by two bytes for one frame. The degree of similarity with the upper position of a first standard pattern is determined for example by a method described previously and is compared with the upper position degree of similarity of the degree of similarity register 78. Now, if the thus determined degree of similarity is larger than the degree of similarity in the register, the current degree of similarity is stored in the register 78 as it is, and then the degree of similarity between the input and the lower position of the standard pattern is determined, which is stored in the degree of similarity register 81 while storing the label of its standard pattern in the label register 82. In the case of matching with the first standard pattern, since each degree of similarity register has been reset and contains 0, the contents is necessarily rewritten. Next, the degree of similarity with the upper position of the second standard pattern in the dictionary is determined and a similar operation is repeated. In this case, if the degree of similarity of the upper position is larger than the register 78, the current degree of similarity is substituted into the register 78 and the degree of similarity of the lower position is determined, which is entered into the register 81 without condition. If the degree of similarity of the upper position is the same as that of the register 78, the degree of similarity is determined immediately and then this is compared with the value of the register 81, whereby its degree of similarity is entered into the register 81 only when the thus determined degree of similarity is larger. In the case when the degree of similarity is substituted into the register 81, the current label is also entered into the label register 82 without fail. On the other hand, if the degree of similarity of the upper position is smaller than the contents of the register 8, it immediately proceeds to matching with the next standard pattern. Such an operation is repeated over the number of standard patterns registered in the dictionary, and upon completion, the label stored in the label register 82 is output as a result of recognition. By using this method, the faster in matching with standard patterns to obtain the maximum degree of similarity, the lower the number of matching of the lower positions and the amount of calculations. Thus, the speed of recognition can be increased.

What has been described is an example in which a standard pattern has a two-layer structure of upper and lower positions; however, this may be three layers or more, and as the number of layers increases, the degree of effects becomes more significant. In addition, in this matching, matching with all of the standard patterns has been assumed; however, the present system may be applied after carrying out preliminary matching.

Fig. 20 is a drawing for describing the overall structure of a prior art voice recognition system. In the drawing, 91 is a microphone; 92 is a pre-processing unit; 93 is a 14-channel bandpass filter bank; 94 is a binary conversion calculating unit; 95 is a dictionary forming unit; 96 is a dictionary; 97 is a recognition calculation unit; and 98 is a result output unit. A voice input through the microphone 91 is corrected in level by the pre-processing unit 92 and then input into the 14-channel bandpass filter (B.P.F.) bank 93. It is subjected to frequency analysis at each periodic sampling of this 14-channel B.P.F. bank and then subjected to binary conversion calculation at the binary conversion calculation unit 94, whereby there can be obtained a binary converted data as shown in Fig. 21. In the present example, since use is made of a 14-channel bandpass filter, there are two empty channels E as shown in the drawing. This binary converted data is used for dictionary formation and for various functions at the recognition unit with one word length.

Fig. 19 shows an apparatus suitable for practicing a pattern matching method according to the present invention. In the drawing, 100 is a voice interval detecting unit; 101 is a voice presence/voice absence detecting unit; 102 is an interval bit control unit; and 103 is a voice presence bit control unit. And, those portions which have similar functions as those of the prior art shown in Fig. 20 are designated by the same reference numerals as those in Fig. 20. Hereinafter, as an example of the present invention, a description will be had with respect to an example in which use is made of a voice interval detection signal and voice presence and voice absence detection for the control bit. A voice input through the microphone passes, similarly as described before, the pre-processing unit and the 14-channel bandpass filter, and a binary converted data is created at the binary conversion unit in a manner similarly as described before. In this case, as shown in Fig. 22, a voice interval signal A and a voice presence/voice absence signal B are placed in the empty channels E of Fig. 21. Here, a voice interval signal is obtained by checking a voice power signal by a certain threshold value as shown in Fig. 23. In addition, as shown in Fig. 24, a voice presence/voice absence signal is obtained such that, while defining voice presence by a negative slope of a least square approximation curve C of a voice formant at the time of sampling and voice absence by a positive slope thereof, the bit of a binary converted data is set at 1 for voice presence and at 0 for voice absence. In this manner, there are obtained a binary converted data of 14-channel frequency components and a binary converted (BTSP) data containing the voice interval signal and the voice presence and voice absence information.

In the thus obtained binary converted information, the binary converted information from the frequency information of channels 1 - 14 is information for obtaining the degree of similarity at the time of essential recognition, whereas the voice interval bit and the voice presence and voice absence bit are control bits at the time of recognition. Dictionary formation is carried out by using the binary converted information thus obtained for one word. In this case, since the control bits are two-value bits similarly with the other information, they are weight-averaged as they are. With the control bits contained in the BTSP data as a binary bit of 0 and 1 as described above, they can be treated similarly with the frequency information of 0 and 1 at the time of formation of a dictionary, which is extremely simple.

Next, a description will be given with respect to a manner of using the control bits at the time of recognition. As described above, regarding the control bits in a dictionary, since the information of each pronunciation is subjected to weight averaging, for example, in the case of three pronunciations, each bit takes a value between 0 and 3 as shown in Fig. 25, which contains a fluctuating component, and thus, in accordance with a control rule predetermined for the control bit at the same position of an unknown, input pattern, pattern matching at the time of recognition is carried out. For example, in the case of a voice presence/voice absence bit, if the voice presence/voice absence bit of the unknown, input pattern is 1, the degree of similarity of its frame is set at 0 only when its bit is 0 with three times of pronunciations of a dictionary or the input is 0 and that of the dictionary is 3. Other than that, an accurate degree of similarity can be obtained by calculating the degree of similarity normally.

In the case of the voice interval signal, for example, simply by arranging not to calculate the degree of similarity only for a portion of 3 or less such as a word end portion of a voice presence block unit, it is possible to carry out a recognition calculation with the generally spoken unstability of a word end portion eliminated. Fig. 26 is a drawing showing this, in which D is a recognition object block range, and a dictionary is formed by subjecting each pronunciation to linear expansion and contraction, whereby a portion of 3 or less, i.e., unstable portion, is not made an object of recognition. In this manner, with the allotment of control bits useful for recognition, there can be constructed a pattern control system which absorbs its fluctuating component. Of course, the kind of a control bit is not limited.

In this manner, by using a pair of 16-bit data having the power of 2 as a unit, the processing speed can be increased, and by allocating a control bit to its empty channel, the calculation control of the frequency data of BTSP can be carried out easily and the absorption of fluctuating components, which is an inherent feature of BTSP, can be contained within the control bit, thereby allowing to carry out recognition easily at high accuracy.

INDUSTRIAL APPLICABILITY

As described in detail above, an apparatus and method of the present invention can be applied to voice recognition.

**Claims**

1. An apparatus for calculating a degree of similarity between an input voice pattern to be analyzed and a registered standard voice pattern, comprising:
   - means (31, 32, 33) for receiving a voice input signal to be analyzed and from which said input voice pattern is to be developed,
   - means (31, 32, 33) for dividing said input signal into n frequency bands;

- means (34) for receiving each said frequency band from said input signal and generating therefrom said input voice pattern in binary form, each said pattern comprising n respective groups of at least one binary data element respectively corresponding to said n frequency bands;
- means (37) for forming and registering a dictionary of standard voice patterns from iterated voice pronunciation patterns, each standard voice pattern being composed of n binary coded values associated to the respective frequency bands, each binary coded value being equal to the total number of times a threshold level in that frequency band is exceeded in a binary time spectrum analysis of the iterated voice pronunciation patterns,
- means (34) for extracting from said standard voice pattern a comparison reference bit pattern composed of n comparison binary values each corresponding to at least the highest bit of the respective n binary coded values of said standard voice pattern,
- comparing means (38) cooperating with the standard voice pattern forming means for comparing said input voice pattern with corresponding bits of said comparison reference bit pattern, said comparing means delivering data indicative of a degree of overlap in said respective in said respective binary elements; and
- means (39) for calculating the degree of similarity in the compared patterns determined in terms of the highest degree of overlap in compared binary elements.

2. Apparatus according to claim 1, characterized in that it further comprises:
- means for designating an upper number (m) of patterns among said respective sub-patterns for said logical comparison by said comparing means in a preliminary phase; and
- means for selecting from said sub-pattern library at least one sub-pattern for comparison with said input voice pattern as a function of the result of said comparison(s) in said preliminary phase.

3. Apparatus according to claim 2, characterized in that it further comprises means for making the pattern to be compared in said preliminary phase the result of a summation of a plurality of sub-patterns if said number (m) is greater than or equal to 2.

4. Apparatus according to claim 1, characterized in that it further comprises means for weighting the result of said comparison depending on the bit position, said similarity calculating means operating on said weighted result.

5. Apparatus according to claim 1, characterized in that the extracting means (34) comprises means for forming said comparison reference bit pattern by taking the highest bit of each of the respective n binary coded values of said standard voice pattern.

6. Apparatus according to claim 1, characterized in that the extracting means (34) comprises means for forming said comparison reference bit pattern by forming a logic combination with the highest bit and an intermediate bit of each of the respective n binary coded values of said standard voice pattern.

7. A method of calculating a degree of similarity between an input voice pattern to be analyzed and a registered standard voice pattern, said input voice pattern being developed from a received voice input signal to be analyzed,
   the method comprising
- dividing said input signal into n frequency bands;
- receiving each said frequency band from said input signal and generating therefrom said input voice pattern in binary form, each said pattern comprising n respective groups of at least one binary data element respectively corresponding to said n frequency bands;
- forming and registering a dictionary of standard voice patterns from iterated voice pronunciation patterns, each standard voice pattern being composed of n binary coded values associated to the respective frequency bands, each binary coded value being equal to the total number of times a threshold level in that frequency band is exceeded in a binary time spectrum analysis of the iterated voice pronunciation patterns,
- extracting from said standard voice pattern a comparison reference bit pattern composed of n comparison binary values each corresponding to at least the highest bit of the respective n binary coded values of said standard voice pattern,
- comparing said input voice pattern with corresponding bits of said comparison reference bit pattern, said comparing means delivering data indicative of a degree of overlap in said respective in said respective binary elements; and
- calculating the degree of similarity in the compared patterns determined in terms of the highest degree of overlap in compared binary elements.

8. Method according to claim 7, characterized in that the extracting step involves forming said comparison reference bit pattern by taking the highest bit of each of the respective n binary coded values of said standard voice pattern.

9. Method according to claim 7, characterized in that the extracting step (34) involves forming said comparison reference bit pattern by forming a logic combination with the highest bit and an intermediate bit of each of the respective n binary coded values of said standard voice pattern.

10. Method according to claim 7, characterized in that it further comprises the steps of:
- designating an upper number (m) of patterns among said respective sub-patterns, for said logical comparison; and
- selecting at least one sub-pattern for comparison with said input voice pattern as a function of the result of said comparison(s) in said preliminary phase.

11. Method according to claim 10, characterized in that it further comprises the step of making the pattern to be compared in said preliminary phase the result of a summation of a plurality of sub-patterns if said number (m) is greater than or equal to 2.

12. Method according to claim 7, characterized in that it further comprises the step of weighting the result of said comparison depending on the bit position, said similarity calculating step being effected on said weighted result.


## Patentansprüche

1. Vorrichtung zum Berechnen eines Ähnlichkeitsgrads zwischen einem zu analysierenden Eingangssprachmuster und einem registrierten Standardsprachmuster, umfassend:
- eine Einrichtung (31, 32, 33) zum Empfangen eines zu analysierenden Spracheingangssignals, aus welchem das Eingangssprachmuster zu entwickeln ist,
- eine Einrichtung (31, 32, 33) zum Unterteilen des Eingangssignals in n Frequenzbänder;
- eine Einrichtung (34) zum Empfangen jedes Frequenzbandes aus dem Eingangsignal und zum Erzeugen des Eingangssprachmusters daraus in binärer Form, wobei jedes Muster n entsprechende Gruppen aus mindestens einem binären Datenelement aufweist, die den n Frequenzbändern entsprechen;
- eine Einrichtung (37) zum Bilden und Registrieren eines Wörterbuchs aus Standardsprachmustern aus wiederholten Sprachäußerungsmustern, wobei jedes Standardsprachmuster sich zusammensetzt aus n binär codierten Werten, die zu entsprechenden Frequenzbändern gehören, und jeder binär codierte Wert gleich ist der Gesamtzahl von Überschreitungen eines Schwellenpegels in diesem Frequenzband im Rahmen einer binären Zeitspektrum-Analyse der wiederholten Sprachäußerungsmuster,
- eine Einrichtung (34), die aus dem Standardsprachmuster ein Vergleichs-Bezugsbitmuster extrahiert, welches sich zusammensetzt aus n Vergleichs-Binärwerten, die jeweils mindestens dem höchsten Bit der jeweiligen n binär codierten Werte des Standardsprachmusters entsprechen,
- eine Vergleichereinrichtung (38), die mit der Standardsprachmuster-Bildungseinrichtung zusammenarbeitet, um das Eingangssprachmuster mit entsprechenden Bits des Vergleichs-Bezugsbitmusters zu vergleichen, wobei die Vergleichereinrichtung Daten liefert, die kennzeichnend sind für ein Überlappungsmaß in den entsprechenden binären Elementen; und
- eine Einrichtung (39) zum Berechnen des Ähnlichkeitsgrads in den verglichenen Mustern, festgelegt als das höchste Überlappungsmaß in den verglichenen Binärelementen.

2. Vorrichtung nach Anspruch 1, **dadurch gekennzeichnet,** daß sie außerdem aufweist:
- eine Einrichtung zum Bezeichnen einer oberen Anzahl (m) von Mustern unter den jeweiligen Untermustern für den logischen Vergleich durch die Vergleichereinrichtung in einer Vorab-Phase; und

- eine Einrichtung, um aus der Untermuster-Bibliothek mindestens ein Untermuster auszuwählen für den Vergleich mit dem Eingangssprachmuster als Funktion von dem Ergebnis des Vergleichs (der Vergleiche) in der Vorab-Phase.

3. Vorrichtung nach Anspruch 2, **dadurch gekennzeichnet,** daß sie außerdem eine Einrichtung aufweist, um das in der Vorab-Phase zu vergleichende Muster zu dem Ergebnis einer Summierung mehrerer Untermuster zu machen, falls die Anzahl (m) größer oder gleich 2 ist.

4. Vorrichtung nach Anspruch 1, **dadurch gekennzeichnet,** daß sie außerdem eine Einrichtung aufweist zum Wichten des Ergebnisses des Vergleichs in Abhängigkeit der Bitposition, wobei die Ähnlichkeits-Berechnungseinrichtung auf der Grundlage des gewichteten Ergebnisses arbeitet.

5. Vorrichtung nach Anspruch 1, **dadurch gekennzeichnet,** daß die Extrahiereinrichtung (34) eine Einrichtung aufweist, um das Vergleichs-Bezugsbitmuster dadurch zu bilden, daß das höchste Bit von jedem der jeweiligen n binär codierten Werte des Standardsprachmusters genommen wird.

6. Vorrichtung anch Anspruch 1, **dadurch gekennzeichnet,** daß die Extrahiereinrichtung (34) eine Einrichtung aufweist zum Bilden des Vergleichs-Bezugsbitmusters, dadurch, daß eine logische Kombination mit dem höchsten Bit und einem Zwischenbit jedes der jeweiligen n binär codierten Werte des Standardsprachmusters gebildet wird.

7. Verfahren zum Berechnen eines Ähnlichkeitsgrads zwischen einem zu analysierenden Eingangssprachmuster und einem registrierten Standardsprachmuster, wobei das Eingangssprachmuster aus einem zu analysierenden empfangenen Spracheingangssignal entwickelt wird, umfassend:
   - Unterteilen des Eingangssignals in n Frequenzbänder;
   - Empfangen jedes Frequenzbandes aus dem Eingangssignal und Erzeugen des Eingangssprachmuster daraus in binärer Form, wobei jedes Muster n zugehörige Gruppen aus mindestens einem binären Datenelement jeweils entsprechend den n Frequenzbändern aufweist;
   - Bilden und Registrieren eines Wörterbuchs von Standardsprachmustern aus wiederholten Sprachäußerungsmustern, wobei jedes Standardsprachmuster sich zusammensetzt aus n binär codierten Werten, die zu den jeweiligen Frequenzbändern gehören, wobei jeder binär codierte Wert gleich ist der Gesamtanzahl von Überschreitungen eines Schwellenpegels in diesem Frequenzband im Rahmen einer binären Zeitspektrumanalyse der wiederholten Sprachäußerungsmuster,
   - Extrahieren eines Vergleichs-Bezugsbitmusters aus dem Standardsprachmuster, wobei das Bezugsbitmuster sich zusammensetzt aus n Vergleichs-Binärwerten, die jeweils mindestens dem höchsten Bit der jeweiligen n binär codierten Werte des Standardsprachmusters entsprechen,
   - Vergleichen des Eingangssprachmusters mit entsprechenden Bits des Vergleichs-Bezugsbitmusters, wobei die Vergleicheeinrichtung Daten liefert, die kennzeichnend sich für ein Überlappungsmaß in den jeweiligen binären Elementen; und
   - Berechnen des Ähnlichkeitsgrades der verglichenen Muster, bestimmt durch das höchste Überlappungsmaß der verglichenen binären Elemente.

8. Verfahren nach Anspruch 7, **dadurch gekennzeichnet,** daß der Schritt des Extrahierens das Bilden des Vergleichs-Bezugsbitmusters beinhaltet, wobei das höchste Bit jedes der jeweiligen n binär codierten Werte in dem Standardsprachmuster genommen wird.

9. Verfahren nach Anspruch 7, **dadurch gekennzeichnet,** daß der Schritt des Extrahierens (34) das Bilden des Vergleichs-Bezugsbitmusters dadurch beinhaltet, daß eine logische Kombination mit dem höchsten Bit und einem Zwischenbit jedes der jeweiligen n binär codierten Werte des Standardsprachmusters gebildet wird.

10. Verfahren nach Anspruch 7, **dadurch gekennzeichnet,** daß es außerdem die Schritte aufweist:
   - Festlegen einer oberen Anzahl (m) von Mustern unter den jeweiligen Untermustern für den logischen Vergleich und
   - Auswählen mindestens eines Untermusters für den Vergleich mit dem Eingangssprachmuster als eine Funktion des Ergebnisses des Vergleichs (der Vergleiche) in der Vorab-Phase.

11. Verfahren nach Anspruch 10, **dadurch gekennzeichnet,** daß es außerdem den Schritt aufweist, bei dem das in der Vorab-Phase zu vergleichende Muster zu dem Ergebnis einer Summierung mehrer Untermuster gemacht wird, falls die Anzahl (m) größer oder gleich 2 ist.

12. Verfahren nach Anspruch 7, **dadurch gekennzeichnet,** daß es außerdem den Schritt des Wichtens des Ergebnisses des Vergleichs abhängig von der Bitposition beinhaltet, wobei der Schritt des Berechnens der Ähnlichkeit auf der Grundlage des gewichteten Ergebnisses erfolgt.

**Revendications**

1. Un appareil destiné à calculer un degré de similitude entre une configuration vocale d'entrée à analyser et une configuration vocale de référence enregistrée, comprenant :
   - des moyens (31, 32, 33) pour recevoir un signal d'entrée vocal à analyser et à partir duquel on doit produire la configuration vocale d'entrée,
   - des moyens (31, 32, 33) pour diviser le signal d'entrée en n bandes de fréquence,
   - des moyens (34) pour recevoir chaque bande de fréquence du signal d'entrée et pour générer à partir d'elle la configuration vocale d'entrée sous forme binaire, chacune de ces configurations comprenant n groupes respectifs d'au moins un élément de données binaire correspondant respectivement aux n bandes de fréquence;
   - des moyens (37) pour former et enregistrer un dictionnaire de configurations vocales de référence à partir de configurations vocales de prononciation itérées, chaque configuration vocale de référence étant constituée par n valeurs codées en binaire associées aux bandes de fréquence respectives, chaque valeur codée en binaire étant égale au nombre total de fois qu'un niveau de seuil dans cette bande de fréquence est dépassé dans une analyse spectrale binaire des configurations vocales de prononciation itérées,
   - des moyens (34) pour extraire de la configuration vocale de référence une configuration de bits de référence de comparaison qui est constituée par n valeurs binaires de comparaison, chacune d'elles correspondant au moins au bit de rang le plus élevé des n valeurs codées en binaire respectives de la configuration vocale de référence,
   - des moyens de comparaison (38), coopérant avec les moyens de formation de configuration vocale de référence, pour comparer la configuration vocale d'entrée avec des bits correspondants de la configuration de bits de référence de comparaison, ces moyens de comparaison fournissant des données qui sont représentatives d'un degré de superposition dans les éléments binaires respectifs; et
   - des moyens (39) pour calculer le degré de similitude dans les configurations comparées, déterminé en termes de degré de superposition le plus élevé dans des éléments binaires comparés.

2. Appareil selon la revendication 1, caractérisé en ce qu'il comprend en outre :
   - des moyens pour désigner un nombre supérieur (m) de configurations parmi des sous-configurations respectives pour la comparaison logique par les moyens de comparaison, dans une phase préliminaire; et
   - des moyens pour sélectionner dans la bibliothèque de sous-configurations au moins une sous-configuration pour la comparaison avec la configuration vocale d'entrée, en fonction du résultat de la comparaison ou des comparaisons dans la phase préliminaire.

3. Appareil selon la revendication 2, caractérisé en ce qu'il comprend en outre des moyens qui sont destinés à faire en sorte que la configuration à comparer dans la phase préliminaire soit le résultat d'une sommation d'un ensemble de sous-configurations, si le nombre précité (m) est supérieur ou égal à 2.

4. Appareil selon la revendication 1, caractérisé en ce qu'il comprend en outre des moyens pour pondérer le résultat de la comparaison précitée sous la dépendance de la position de bit, les moyens de calcul de similitude travaillant sur ce résultat pondéré.

5. Appareil selon la revendication 1, caractérisé en ce que les moyens d'extraction (34) comprennent des moyens pour former la configuration de bits de référence de comparaison en prenant le bit de rang le plus élevé de chacune des n valeurs codées en binaire respectives de la configuration vocale de référence.

6. Appareil selon la revendication 1, caractérisé en ce que les moyens d'extraction (34) comprennent des moyens pour former la configuration de bits de référence de comparaison en formant une combinaison logique avec le bit de rang le plus élevé et un bit intermédiaire de chacune des n valeurs codées en binaire respectives de la configuration vocale de référence.

7. Un procédé de calcul d'un degré de similitude entre une configuration vocale d'entrée à analyser et une configuration vocale de référence enregistrée, cette configuration vocale d'entrée étant produite à partir d'un signal d'entrée vocal reçu à analyser,

le procédé comprenant :
- la division du signal d'entrée en n bandes de fréquence;
- la réception de chaque bande de fréquence provenant du signal d'entrée, et la génération à partir d'elles de la configuration vocale d'entrée sous forme binaire, chaque configuration comprenant n groupes respectifs d'au moins un élément de données binaire correspondant respectivement aux n bandes de fréquence;
- la formation et l'enregistrement d'un dictionnaire de configurations vocales de référence à partir de configurations vocales de prononciation itérées, chaque configuration vocale de référence étant constituée par n valeurs codées en binaire associées aux bandes de fréquence respectives, chaque valeur codée en binaire étant égale au nombre total de fois qu'un niveau de seuil dans cette bande de fréquence est dépassée dans une analyse spectrale temporelle binaire des configurations vocales de prononciation itérées,
- l'extraction à partir de la configuration vocale de référence, d'une configuration de bits de référence de comparaison qui est constituée par n valeurs binaires de comparaison, correspondant chacune au moins au bit de rang le plus élevé des n valeurs codées en binaire respectives de la configuration vocale de référence,
- la comparaison de la configuration vocale d'entrée avec des bits correspondants de la configuration de bits de référence de comparaison, les moyens de comparaison fournissant des données qui sont représentatives d'un degré de superposition dans les éléments binaires respectifs, et
- le calcul du degré de similitude dans les configurations comparées, déterminé en termes de degré le plus élevé de superposition dans des éléments binaires comparés.

8. Procédé selon la revendication 7, caractérisé en ce que l'étape d'extraction fait intervenir la formation de la configuration de bits de référence de comparaison par le prélèvement du bit de rang le plus élevé de chacune des n valeurs codées en binaire respectives de la configuration vocale de référence.

9. Procédé selon la revendication 7, caractérisé en ce que l'étape d'extraction (34) fait intervenir la formation de la configuration de bits de référence de comparaison par la formation d'une combinaison logique avec le bit de rang le plus élevé et un bit intermédiaire de chacune des n valeurs codées en binaire respectives de la configuration vocale de référence.

10. Procédé selon la revendication 7, caractérisé en ce qu'il comprend en outre les étapes suivantes :
- on désigne un nombre supérieur (m) de configurations parmi les sous-configurations respectives, pour la comparaison logique; et
- on sélectionne au moins une sous-configuration pour la comparaison avec la configuration vocale d'entrée, en fonction du résultat de la comparaison ou des comparaisons dans la phase préliminaire.

11. Procédé selon la revendication 10, caractérisé en ce qu'il comprend en outre l'étape qui consiste à faire en sorte que la configuration à comparer dans la phase préliminaire soit le résultat d'une sommation d'un ensemble de sous-configurations si le nombre précité (m) est supérieur ou égal à 2.

12. Procédé selon la revendication 7, caractérisé en ce qu'il comprend en outre l'étape qui consiste à pondérer le résultat de la comparaison sous la dépendance de la position de bit, l'étape de calcul de similitude étant effectuée sur ce résultat pondéré.

# Fig. 1

RECOGNITION

FORMATION
OF DICTIONARY

# Fig. 2

RECOGNITION

FORMATION
OF DICTIONARY

# Fig. 3

```
 0  1  2  3 ------- 2  1
[0][0][1][1]- - -[1][0]  UPPER POSITION
[0][1][0][1]- - -[0][1]  LOWER POSITION
```

LOGICAL PRODUCT

```
[0][1][0]- - -[1][0]
```
UNKNOWN INPUT

# Fig. 4

INPUT VOICE

```
[1][2][3]------[16]
```

BINARY CONVERSION PROCESSING

```
[0][1][0]-------[1]
```
2 BYTES

# Fig. 5

2 BYTES

```
[ ][ ][ ][       ][ ]
        +
[ ][ ][ ][       ][ ]
        +
[ ][ ][ ][       ][ ]
 |  |  |          |
 0  1  2          3
```

EP 0 275 327 B1

# Fig. 6

```
0  I  2        3.
|  |  |        |
O  O  I        I  — UPPER  BYTE
O  I  O        I  — LOWER  BYTE
```

| O | O | I |  |  | I |
|---|---|---|---|---|---|

UPPER  POSITION

| O | I | O |  |  | I |
|---|---|---|---|---|---|

LOWER  POSITION

⌣—— 2 BYTES ——⌣

# Fig. 7

```
0   I  2            3    STANDARD  PATTERN
```

| O | O | I |  |  | I |
|---|---|---|---|---|---|

UNKNOWN  INPUT

```
0   0  2            3
```

⊕

DEGREE OF
SIMILARITY

# Fig. 8

STANDARD PATTERN

| O | O | I |  |  | I |
|---|---|---|---|---|---|

| O | I | O |  |  | I |
|---|---|---|---|---|---|

X2          UNKNOWN  INPUT

| O | O | I |  |  | I |
|---|---|---|---|---|---|

# Fig. 9

31

32

33

34

35

j = 1
A(i) = 0

36

A(i) = A(i) + aij

j = 1, 15

DICTIONARY
REGISTRATION

37

RECOGNITION

38

39

# Fig.10

|     | ch | 1 | 2 | 3 | - - - - - - - - - - - - - | 15 | NUMBER OF PRONUNCIATIONS |
|-----|----|---|---|---|---------------------------|----|

| 1 | 0 | 1 | 1 | - - - - - - - - - - - | 1 | FIRST |
|---|---|---|---|-----------------------|---|-------|

| 1 | 1 | 1 | 1 | - - - - - - - - - - - | 0 | SECOND |
|---|---|---|---|-----------------------|---|--------|

| 1 | 1 | 1 | 0 | - - - - - - - - - - - | 0 | THIRD |
|---|---|---|---|-----------------------|---|-------|

| 3 | 2 | 3 | 2 | - - - - - - - - - - - | 1 | STANDARD PATTERN |
|---|---|---|---|-----------------------|---|------------------|

# Fig.11

# Fig. 12

```
┌─────────────────────┐
│     VOICE  INPUT    │
└─────────────────────┘
           │
┌─────────────────────────┐
│   EXTRACT  UPPER        │
│   BYTES  OF  DICTIONARY │
└─────────────────────────┘
           │
      ┌──────────┐
      │ MATCHING │
      └──────────┘
           │
         ╱   ╲
       ╱ MATCHING ╲
NO  ╱ COMPLETED FOR ALL ╲
◄──╲    WORDS  ?    ╱
      ╲           ╱
         ╲   ╱
           │ YES
┌─────────────────────────┐
│  ARRANGE   ACCORDING    │
│  TO  HIGHER  DEGREE  OF │
│  SIMILARITY             │
└─────────────────────────┘
           │
┌─────────────────────────┐
│  SELECT  UPPER   N/3    │
└─────────────────────────┘
N/3        │
┌─────────────────────────┐
│  MATCHING  USING  THE   │
│  ENTIRE  DICTIONARY     │
│  PATTERN                │
└─────────────────────────┘
           │
┌─────────────────────────┐
│  SELECT  A  WORD        │
│  HAVING  LARGEST        │
│  DEGREE  OF  SIMILARITY │
└─────────────────────────┘
           │
┌─────────────────────────┐
│  OUTPUT  WORD  NAME    /
└───────────────────────┘
```

# Fig. 13

## (a)

|   |   |   |   |   |   |   |   |   |
|---|---|---|---|---|---|---|---|---|
| 0 | 6 | 7 | 5 | | | 2 | 1 |

CHANNEL

1 2 3 4     5 6

## (b)

|   |   |   |   |   |   |   |
|---|---|---|---|---|---|---|
| 0 | 1 | 1 | 1 | | 0 | 0 | UPPER POSITION |
| 0 | 1 | 1 | 0 | | 1 | 0 | INTERMEDIATE POSITION |
| 0 | 0 | 1 | 1 | | 0 | 1 | LOWER POSITION |

## (c)

5

THRESHOLD

ch

## (d)

1

1  2  3  4     15  16     ch

# Fig. 14

# Fig. 15

```
VOICE  INPUT

EXTRACT UPPER  &
INTERMEDIATE  BYTES
OF DICTIONARY

LOGICAL  SUM  OF
UPPER  &  INTERMEDIATE
BYTES

MATCHING

MATCHING
COMPLETED  FOR  ALL
WORDS  ?          NO / YES

ARRANGE  ACCORDING
TO HIGHER DEGREE  OF
SIMILARITY

SELECT  UPPER  N/3

MATCHING  USING  THE
ENTIRE  DICTIONARY
PATTERN

MATCHING
COMPLETED  FOR  N/3
WORDS  ?          NO / YES

SELECT  A  WORD
HAVING  LARGEST
DEGREE  OF  SIMILARITY

OUTPUT  WORD  NAME
```

25

# Fig. 16

(a)

(b)

LOGICAL SUM

UPPER POSITION
INTERMEDIATE POSITION
LOWER POSITION

(c)

(d)

7

THRESHOLD

(e)

1

# F i g. 17

# Fig.18

FILTER BANK — 72
INTERVAL DETERMINATION — 73
71
BINARY CONVERSION — 74
76
DEGREE OF SIMILARITY — 75
UPPER — 76a
LOWER — 76b
UPPER DEGREE OF SIMILARITY — 78
COMPARISON — 77
DEGREE OF SIMILARITY — 79
LABEL
LOWER DEGREE OF SIMILARITY
COMPARISON — 80
82
81
DISPLAY LABEL — 83

EP 0 275 327 B1

# Fig.19

# Fig.20

FORMATION
OF DICTIONARY

RECOGNITION

# Fig.21

| 0 | I | I | 0 | | | | 0 | | |

CHANNEL        16 BITS = 2BYTES
I  2                                                    I4  ⊢ E ⊣

# Fig. 22

| 0 | l | l | 0 | ·········· | 0 | l | l |

CHANNEL
1 2 3 ········ 14  B

A

# Fig. 23

VOICE POWER

th

TIME

0 0 0 l l l l ········

# Fig. 24

POWER

C

FREQUENCY

1 2 ··········· 14

# Fig. 25

```
                                          A   B
                                          /   /
          ──────────→ CHANNEL             /   /
      0 I 3 3 3 2 0 0 0 I 2 I 0 0 3 2
      0 I 2 3 3 2 I 0 0 I 3 2 0 0 3 3
TIME                        ⋮

      0 0 0 I 2 I 0 0 0 I 2 3 3 3 0 0
                                      2 0
                            ⋮         I 0
                                      0 0
                                      0 0
```

# Fig. 26

1st PRONUNCIATION

2nd PRONUNCIATION

3rd PRONUNCIATION

DICTIONARY